## Europäisches Patentamt

## European Patent Office

## Office européen des brevets

(11) Veröffentlichungsnummer: **0 212 041**
**B1**

(12) **EUROPÄISCHE PATENTSCHRIFT**

(45) Veröffentlichungstag der Patentschrift:
26.04.89

(51) Int. Cl.⁴: **F16D 3/12**, F16D 3/14,
F16F 15/12, F16F 9/10

(21) Anmeldenummer: 86100318.4

(22) Anmeldetag: **11.01.86**

(54) Schwungrad.

(30) Priorität: 06.08.85 DE 3528175

(43) Veröffentlichungstag der Anmeldung:
04.03.87 Patentblatt 87/10

(45) Bekanntmachung des Hinweises auf die Patenterteilung:
26.04.89 Patentblatt 89/17

(84) Benannte Vertragsstaaten:
DE FR GB IT

(56) Entgegenhaltungen:
DE-A- 2 813 002
DE-A- 3 405 949
FR-A- 2 268 186
GB-A- 1 526 806
GB-A- 2 052 683
GB-A- 2 068 508
GB-A- 2 145 497
GB-A- 2 151 332

(73) Patentinhaber: **Firma Carl Freudenberg, Höhnerweg 4,
D-6940 Weinheim/Bergstrasse(DE)**

(72) Erfinder: **Eckel, Hans-Gerd, Dr., Am Hefen 1a,
D-6945 Hirschberg-Leutershausen(DE)**
Erfinder: **Grassmuck, Volker, Ahornstrasse 36,
D-6940 Weinheim(DE)**
Erfinder: **Jörg, Benno, Drachenstein 27,
D-6940 Weinheim(DE)**
Erfinder: **Kurr, Klaus, Dr., Brunnengasse 9,
D-6940 Weinheim-Hohensachsen(DE)**
Erfinder: **Sommer, Eberhard, Goethestrasse 4,
D-6940 Weinheim-Laudenbach(DE)**

(74) Vertreter: **Weissenfeld-Richters, Helga, Dr.,
Höhnerweg 2, D-6940 Weinheim/Bergstrasse(DE)**

ACTORUM AG

## Beschreibung

Ein Schwungrad nach dem Oberbegriff des Anspruchs 1 ist bekannt aus der deutschen Offenlegungsschrift 2 931 423. Die Feder und die Dämpfungseinrichtung sind dabei in einer Reihenschaltung zwischen dem ersten und dem zweiten Schwungring angeordnet und so aufeinander abgestimmt, daß die Dämpfungseinrichtung erst zur Wirkung kommt, wenn das übertragene Drehmoment die Tragfähigkeit der Feder überschreitet. Die Dämpfungseinrichtung dient damit lediglich der Begrenzung des zu übertragenden Drehmomentes auf einen ganz bestimmten Wert. Sie ist unterhalb dieses Wertes ebenso wirkungslos wie die Feder bei oberhalb liegenden Werten. Unter normalen Betriebsbedingungen gelingt es daher nur selten, eine Übertragung von kritischen Schwingungen über das Schwungrad zu unterbinden.

Aus der GB-A 2 052 683 und der GB-A 2 151 332 sind Kupplungsscheiben bekannt, bei denen der den Reibbelag aufweisende Träger relativ verdrehbar auf einem Nabenteil gelagert ist. Relativverdrehungen wirkt dabei eine Federungseinrichtung und eine Dämpfungseinrichtung entgegen, die parallel zueinander wirksam und so gestaltet sind, daß bei kleinen Relativverdrehungen innerhalb eines Totganges die Dämpfungswirksamkeit der Dämpfungseinrichtung weitgehend aufgehoben ist. Die Dämpfungswirksamkeit beruht hierbei auf der Ausnutzung von Reibeffekten, die verschleißbelastet und daher nur während einer relativ kurzen Gebrauchsdauer nutzbar sind. Auch ist die Herstellung einer mechanisch wirkenden Dämpfungseinrichtung relativ aufwendig, was wenig befriedigend ist.

Aus der FR-A 2 268 186 ist eine Kupplung für Getriebewellen bekannt, bei der die beiderseitigen Wellenflansche durch zwei einen axialen Abstand aufweisende, gummielastische Federkörper verbunden sind, wobei der durch den Abstand gebildete Zwischenraum der Federkörper nach außen abgeschlossen und zumindest teilweise mit einer Flüssigkeit gefüllt ist. In ihn ragen Ringscheiben der beiden Flansche hinein, die einander bis auf einen geringen axialen Abstand angenähert sind und eine Dämpfung von Verdrehschwingungen bewirken. Diese ist indessen bei jeder beliebig großen Verdrehamplitude der beiden durch die Flansche verbundenen Wellenenden wirksam und bedingt eine Beeinträchtigung der schwingungstechnischen Isolierung der beiden Wellenenden.

Der Erfindung liegt die Aufgabe zugrunde, ein Schwungrad nach dem Oberbegriff von Anspruch 1 zu zeigen, bei dem bei Gewährleistung einer günstigen Herstellbarkeit sowie einer langen Gebrauchsdauer die Übertragung kritischer Schwingungen unter normalen Betriebsbedingungen weitgehend ausgeschlossen ist.

Diese Aufgabe wird erfindungsgemäß durch die kennzeichnenden Merkmale von Anspruch 1 gelöst. Auf vorteilhafte Ausgestaltungen nehmen die Unteransprüche Bezug.

Bei dem erfindungsgemäßen Schwungrad gelangt eine Dämpfungseinrichtung zur Anwendung, die sich der Viskositätsdämpfung bedient. Die einander gegenüberliegenden Dämpfungszonen der Feder und der Schwungringe haben im nicht verdrehten Zustand in Umfangsrichtung einen größeren Abstand voneinander als im relativ verdrehten Zustand, wodurch die resultierenden Dämpfungskräfte im ersten Falle wesentlich geringer sind als im letztgenannten Falle. Schwingungen einer großen Amplitude werden dadurch hochgradig gedämpft, während die Dämpfungswirkung bei Einleitung von Schwingungen einer kleinen Amplitude je nach maßlicher Abstimmung vernachlässigbar gering ist. Trotz der Verwendung einer hydraulischen Dämpfungseinrichtung resultiert dadurch eine differenzierte Wirksamkeit in bezug auf die Einleitung von Schwingungen unterschiedlicher Frequenzen. Sie wird bei der erfindungsgemäßen Ausführung jedoch unter Verzicht auf die Verwendung von verschleißbeanspruchten Präzisionsteilen erzielt, was unter dem Gesichtspunkt der günstigen Herstellbarkeit sowie der Erzielung einer langen Gebrauchsdauer von großem Vorteil ist.

Durch die erfindungsgemäß vorgesehene Ausbildung des Schwungrades werden Schwingungen einer kleiner Amplitude unter Ausnutzung des Totganges der Dämpfungseinrichtung von dieser ferngehalten und durch die Nachgiebigkeit der Feder isoliert. Sie können dadurch nicht störend über das Schwungrad übertragen werden.

Bei Einleitung von Schwingungen einer größeren Amplitude wird der Totgang überwunden und die Dämpfungseinrichtung zu der Feder parallelgeschaltet. Das führt zu einer guten Dämpfung. Die störende Übertragung solcher Schwingungen wird sicher vermieden, desgleichen die Gefahr des Auftretens von Resonanzschwingungen mit überhöhter Amplitude.

Die Feder ist bei einer ringförmigen Ausbildung dem ersten und dem zweiten Schwungring konzentrisch zugeordnet. Eine Unwuchtigkeit wird hierdurch vermieden und erlaubt eine problemlose Verwendung des vorgeschlagenen Schwungrades in Antriebssträngen, in denen höchste Drehzahlen auftreten.

Die Feder besteht aus gummielastischem Werkstoff. Dieser weist im Gegensatz zu metallischen Werkstoffen eine Eigendämpfung auf, was zu einem schnelleren Abklingen hochfrequenter Schwingungen führt sowie zu einer gewissen Entlastung der eigentlichen Dämpfungseinrichtung. Es versteht sich von selbst, daß aufgrund des erheblichen, graduellen Unterschiedes in der Wirksamkeit der Eigendämpfung gummielastischer Werkstoffe die Verwendung der zusätzlich vorgesehenen Dämpfungseinrichtung nicht ersetzen kann.

Die Feder kann einander radial umschließende Halteflächen des ersten und des zweiten Schwungringes verbinden. Hierdurch wird eine besonders kurze axiale Baulänge des Schwungrades erreicht, was den Einbau erleichtert. Eine Verminderung des Durchmessers läßt sich demgegenüber erreichen durch eine Ausgestaltung, bei der die Feder einander axial gegenüberliegende Halteflächen des ersten und des zweiten Schwungringes verbindet.

Auch die praktische Anwendung von Mischformen zwischen beiden Ausführungen kann in die Überlegung miteinbezogen werden, somit von Ausführungsformen, bei denen mindestens eine Feder an einander axial gegenüberliegenden Halteflächen der beiden Schwungringe festgelegt ist und mindestens eine weitere Feder an einander radial umschließenden Halteflächen der beiden Schwungringe. Die koaxiale Führung beider Schwungringe ineinander erfährt hierdurch eine Verbesserung.

Die Schwungringe haben außerhalb der Halteflächen einen Abstand von der Feder, die aus gummielastischem Werkstoff besteht. Eventuell eingeleitete Wärme wird hierdurch von der Feder ferngehalten, was im Hinblick auf die Erzielung einer guten Gebrauchsdauer von Vorteil ist.

Der durch den Abstand gebildete Hohlraum ist gegenüber dem relativ verdrehbaren Schwungring abgedichtet und mit einer Flüssigkeit gefüllt. In Abhängigkeit von der eingeleiteten Drehzahl baut sich in dieser fliehkraftbedingt ein Druck auf, der bei sachgerechter Auslegung geeignet ist, eine fliehkraftbedingte Deformierung der Feder weitgehend auszuschließen oder ganz zu unterdrücken. Die Verwendung des Schwungrades in Anwendungen, bei denen hohe Drehzahlen auftreten, wird hierdurch erleichtert.

Die Bereiche relativer Verdrehbeweglichkeit, in denen die beiden Schwungringe nur federnd bzw. federnd und zusätzlich gedämpft verbunden sind, können beliebig gegeneinander abgegrenzt werden. Der Winkelbereich von ±30° soll jedoch nicht überschritten werden. Im allgemeinen Maschinenbau hat sich eine Abgrenzung als vorteilhaft bewährt, die eine rein federnde Relativverdrehung der beiden Schwungringe von ±10° zuläßt, im Bereich der KFZ-Technik eine solche, die eine rein federnde Relativverdrehung um ±5° gestattet. Je nach Anwendungsgebiet gelingt es so in beiden Fällen, eine optimale Unterdrückung störender Schwingungen im gesamten Frequenzbereich zu erzielen.

In einigen Anwendungsfällen hat es sich bewährt, wenn die unterschiedlich großen Umfangsabstände zwischen den einander gegenüberliegenden Dämpfungszonen ein- oder mehrfach abgestuft ineinander übergehen. Der Grad der erzielten Dämpfungswirkung steigt in diesem Falle an in Abhängigkeit von der relativen Verdrehung beider Schwungringe, was beispielsweise bei einem plötzlichen Lastwechsel eines Motors der Fall ist.

Anspruch 6 nimmt auf eine entsprechende Ausgestaltung Bezug. Nach Anspruch 7 ist es vorgesehen, daß der größere Umfangsabstand der Dämpfungszonen gleichmäßig in die übrigen Flächen übergeht. Stoßartige Dämpfungskraftänderungen, die unter Umständen eine impulsartige Anregung des gesamten Antriebsstranges eines Kraftfahrzeuges zur Folge haben können, lassen sich hierdurch vermeiden.

Die insgesamt erzielte Dämpfungswirkung ist maßgeblich abhängig von der Größe der von der Dämpfungsflüssigkeit beiderseits benetzten Flächen.

Diese lassen sich bei Bedarf vergrößern durch Anbringung wenigstens eines ringförmig vorspringenden Ansatzes an der Feder und/oder dem ersten oder dem zweiten Schwungring.

Die Erfindung wird nachfolgend anhand der als Anlage beigefügten Zeichnung weiter erläutert. Es zeigen:

Figur 1 ein Schwungrad, bei dem die Feder zwischen einander radial umschließenden Halteflächen der Schwungringe angeordnet ist und bei der die Dämpfungseinrichtung aus einem Viskositätsdämpfer besteht.

Figur 2 eine Ausführung ähnlich Figur 2, bei der die Feder an einen axialen Abstand aufweisenden Halteflächen der Schwungringe festgelegt ist.

Figuren 3 bis 6 zwei Ausführungen von Viskositätsdämpfern in zerlegtem und montiertem Zustand, bei denen die aneinander vorbeiführbaren Dämpfungszonen in dargestelltem, nicht verdrehtem Zustand beider Schwungringe einen größeren Umfangsabstand voneinander haben als in dem aus einer relativen Verdrehung resultierenden Zustand gegenseitiger Überlappung. Im letztgenannten Falle ergibt sich eine relativ vergrößerte Dämpfungswirkung.

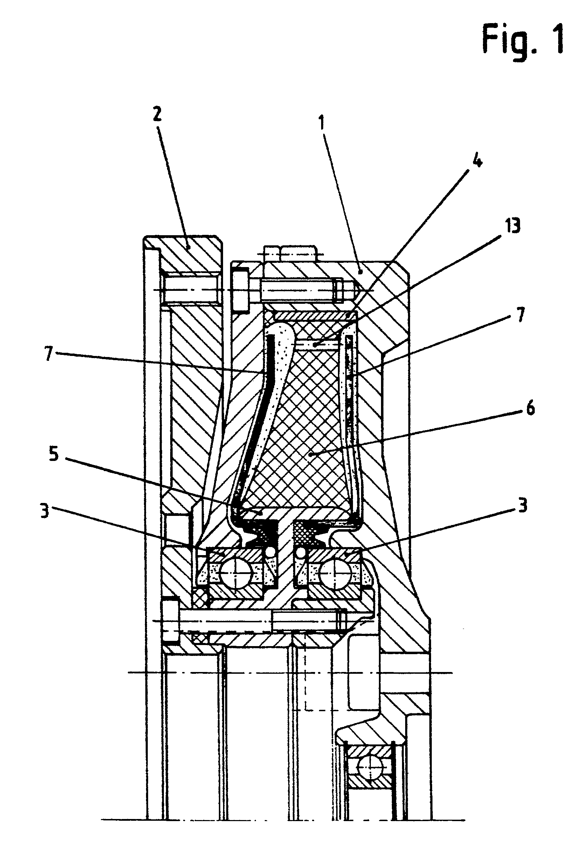

Das in Figur 1 in halbgeschnittener Darstellung wiedergebene Schwungrad ist zur Verwendung zwischen dem Motor und dem Getriebe eines Kraftfahrzeuges bestimmt. Es umfaßt antriebsseitig den mit dem Anlasserritzel versehenen ersten Schwungring 1 und abtriebsseitig den nach dem Einbau die nicht dargestellte Kupplungsscheibe aufnehmenden zweiten Schwungring 2. Der erste Schwungring 1 und der zweite Schwungring 2 sind durch die Lagerung 3 relativ verdrehbar, konzentrisch ineinander gelagert. Sie umschließen einen kreisringförmigen Hohlraum, in dem die Feder 6 angeordnet ist.

Die Feder 6 ist von kreisringförmiger Gestalt und besteht aus gummielastischem Werkstoff. Sie ist außenseitig durch Vulkanisation mit dem Haltering 4 verbunden, innenseitig durch Vulkanisation mit dem Haltering 5. Der Haltering 5 ist unter Zwischenfügung einer Wärmedämmscheibe 7 mit dem zweiten Schwungring 2 verschraubt, der Haltering 5 mit dem ersten Schwungring 1.

Die Feder 6 hat beiderseits einen axialen Abstand von den gegenüberliegenden Begrenzungswänden des ersten Schwungringes 1, und die so gebildeten Hohlräume sind gegenüber dem zweiten Schwungring 2 dynamisch abgedichtet und mit Silikonöl der Viskosität von 100 bis 200 000 cSt gefüllt. Von diesem werden zugleich die in die Hohlräume eintauchenden Teller 7 beiderseits benetzt, welche im Bereich ihres Innenumfanges an den zweiten Schwungring 2 festgelegt sind. Eine relative Verdrehung des ersten Schwungringes 1 in bezug auf den zweiten Schwungring 2 hat daduch neben einer elastischen Verformung der Feder 6 eine Viskositätsdämpfung der Bewegung zur Folge. Die die Feder 6 in axialer Richtung beiderseits begrenzenden, flüssigkeitgefüllten Hohlräume stehen durch den im Bereich des Außenumfanges der Feder 6 angeordneten Kanal 13 in Verbindung. Die durch eine Drehbewegung in den beiden Räumen entstehende Drucksteigerung ist daher vollkommen ausgeglichen und gewährleistet eine gute mechanische Abstützung der Feder 6 gegen fliehkraftbedingte Deformierungen.

Auch eine einseitige Wärmebeaufschlagung vermag die diesbezüglich guten Verhältnisse nicht zu verändern. Die Ausführung eignet sich daher für Anwendungsfälle, in denen höchste Belastungen auftreten.

Am einfachsten lassen sich Verformungen des Federkörpers durch die Verwendung einer Flüssigkeit kompensieren, die dieselbe Dichte hat wie der Federkörper. Entsprechende Flüssigkeiten sind bekannt. Eine Auffüllen des vorhandenen Freiraumes der sich drehenden Wellenkupplung bis zur radial inneren Begrenzungsfläche des Federkörpers führt in diesem Falle zu vollem Erfolg.

In Fällen, in denen der Federkörper eine größere Dichte aufweist als die Flüssigkeit, läßt sich ein entsprechendes Ergebnis erzielen durch eine entsprechend vergrößerte Überflutung der radialen Innenfläche des Federkörpers bei sich drehender Wellenkupplung. Die Höhe der im Einzelfalle erforderlichen Überflutung läßt sich im Versuch exakt ermitteln oder auch errechnen. Ein besonderer Aufwand ist hinsichtlich der diesbezüglichen Feinarbeit jedoch in den meisten Fällen entbehrlich und zumindest teilweise durch Erfahrungswissen ersetzbar.

Der die Flüssigkeit enthaltende Freiraum ist in radialer Richtung nach außen und in axialer Richtung beiderseits flüssigkeitsundurchlässig begrenzt. Er bedarf durch die ringförmige Verteilung des enthaltenen Flüssigkeitsvolumens bei sich drehender Welle auch in dem radial innenliegenden Bereich an sich keiner sekundären Abdichtung, wenn sichergestellt ist, daß das betriebsnotwendige Flüssigkeitsvolumen bei Wellenstillstand nicht entweichen kann.

Die Verwendung einer Dichtung zwischen den beiden Flanschen in dem genannten Bereich ist jedoch möglich und empfiehlt sich insbesondere dann, wenn die Einhaltung der vorgenannten Bedingung nicht möglich oder zu befürchten ist, daß sich während des normalen Betriebes der Wellenkupplung Fremdstoffe in den Freiraum einlagern. Insbesondere die Verwendung von Bewegungsdichtungen hat sich ausgezeichnet bewährt. Ihre Anbringung in anderen Zonen der Wellenkupplung ist ebenfalls möglich, erfordert jedoch eine spezielle Berücksichtigung des sich fliehkraftbedingt ergebenden Druckaufbaues in dem Freiraum. Eine Zuordnung zum Innendurchmesser der Wellenkupplung wird daher bevorzugt.

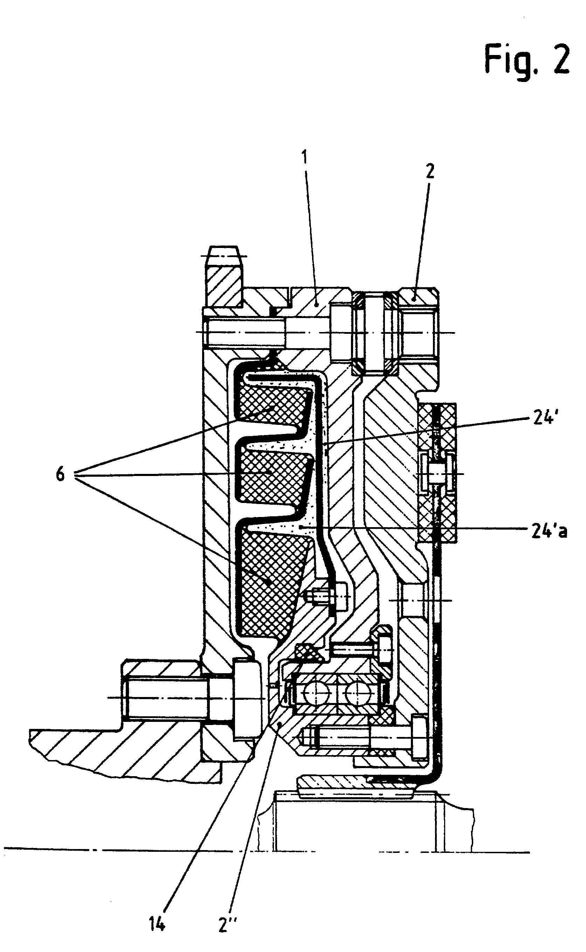

Das in Figur 2 gezeigte Schwungrad ist funktionell dem vorstehend beschriebenen ähnlich. Auch in diesem Falle gelangt ein Viskositätsdämpfer zur Anwendung, bei dem die Feder wegen ihrer Festlegung an einen axialen Abstand aufweisenden Halteflächen des ersten Schwungringes 1 und des zweiten Schwungringes 2 indessen nur außenseitig von viskoser Flüssigkeit benetzt ist. Diese füllt den vorhandenen Freiraum bei sich drehendem Schwungrad bis zur Höhe der radial inneren Begrenzungsfläche der Feder aus und verhindert so fliehkraftbedingte Deformierungen der Feder. Die Flüssigkeit ist daher nur in einem einzigen in sich geschlossenen Hohlraum enthalten und zur dynamischen Abdichtung dieses Hohlraumes genügt daher im Gegensatz zur vorstehend beschriebenen Ausführung ein einziger Dichtring 14.

Die Feder 6 wurde bei der Ausführung nach Figur 2 zur Reduzierung der axialen Baulänge in drei einander in radialer Richtung umschließende Ringe unterteilt. Diese sind hinsichtlich ihres Querschnittes so aufeinander abgestimmt, daß sich bei einer gegenseitigen Verdrehung der beiden Schwungringe in allen drei Fällen dieselbe Querschnittsbelastung ergibt.

Für die Herstellung aller drei Ringe genügt daher ein einziger Werkstoff von bestimmter Nachgiebigkeit, was die Herstellung erleichtert.

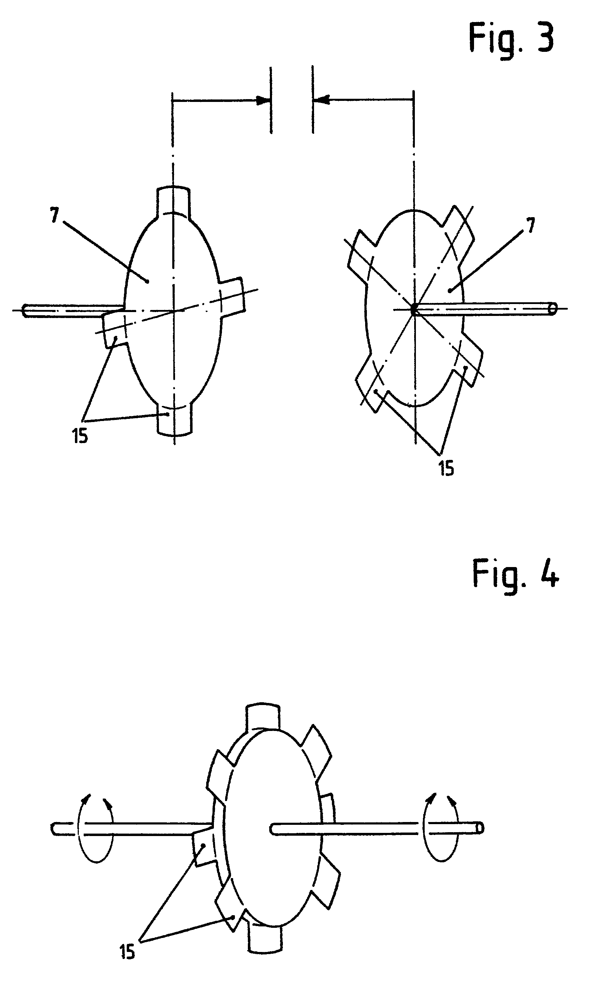

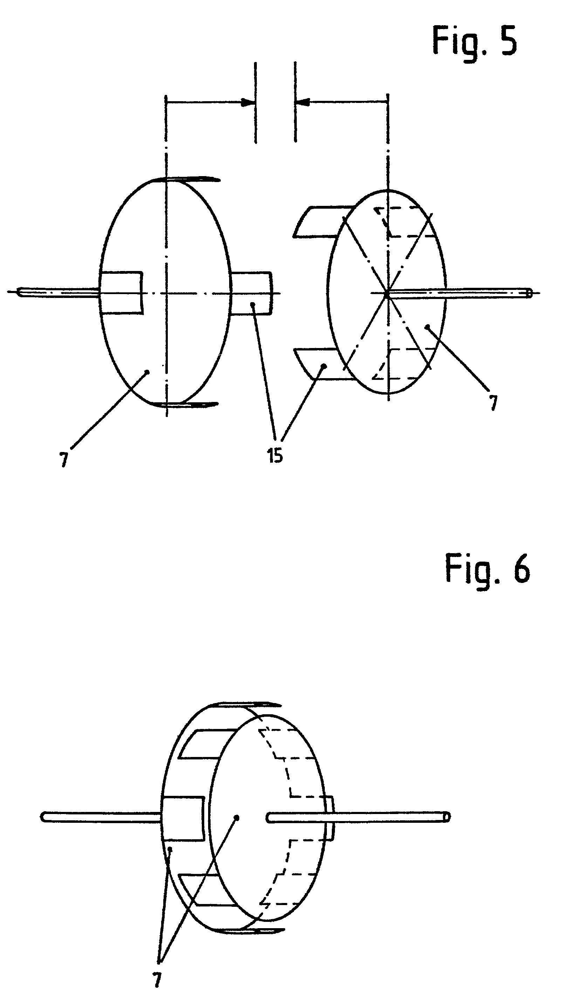

Die Figuren 3 bis 6 zeigen zwei beispielhafte Ausführungsformen von Viskositätsdämpfern. Diese sind in den Figuren 3 und 5 in zerlegter Form dargestellt, in den Figuren 4 und 6 in der sich aus der Montage ergebenden, gegenseitigen Zuordnung.

Beide gezeigten Viskosistätsdämpfer umfassen von der viskosen Flüssigkeit benetzte Teller 7, die von kreisförmiger Gestalt und unverdrehbar an jeweils einem der beiden Schwungringe festgelegt sind bzw. einen festen Bestandteil derselben bilden.

Bei der Ausgestaltungsform nach den Figuren 3 und 4 sind die Teller jeweils mit in radialer Richtung nach außen vorspringenden Dämpfungszonen 15 versehen, bei derjenigen nach den Figuren 5 und 6 mit sich in axialer Richtung erstreckenden Dämpfungszonen. Sie sind nach der sich durch den Einbau ergebenden Zusammenfügung der Teller in geringem Abstand aneinander vorbeiführbar, wobei sich durch das in dem Zwischenraum zwischen den Tellern enthaltene, viskose Medium eine ansteigende Dämpfungswirkung ergibt. Diese ist so lange vernachlässigbar gering, wie zwischen den einander gegenüber liegenden Dämpfungszonen eine Überlappung nicht vorhanden ist und steigt nach dem Eintreten einer geringfügigen Überlappung gleichmäßig an bis zum Erreichen der maximalen Flächenüberdeckung. Es ist leicht einsehbar, daß die sich ergebende Dämpfungswirkung durch eine Veränderung des gegenseitigen Abstandes der Dämpfungszonen 15 sowie von deren Größe bzw. durch eine Veränderung der Viskosität der enthaltenen Flüssigkeit auf nahezu jede Charakteristik einstellbar ist. Eine dämpfungslose Relativverdrehbarkeit von ±10° hat sich im allgemeinen als vorteilhaft bewährt.

**Patentansprüche**

1. Schwungrad, umfassend einen mit der Antriebswelle verbundenen, ersten Schwungring (1) und einen mit der Abtriebswelle verbundenen, zweiten Schwungring (2), die relativ verdrehbar, konzentrisch ineinander gelagert sind, wobei zwischen dem ersten und dem zweiten Schwungring (1, 2) eine Feder (6) und eine Dämpfungseinrichtung zur Hemmung einer relativen Verdrehung vorgesehen sind, dadurch gekennzeichnet, daß die Feder (6) bei einer ringförmigen Gestalt aus gummielastischem Werkstoff besteht und den Schwungringen (1, 2) konzentrisch zugeordnet ist, daß die Feder (6) durch Halteflächen an den Schwungringen (1, 2) festgelegt ist und außerhalb der Halteflächen einen Abstand von denselben aufweist, daß durch den Abstand ein Hohlraum gebildet wird, der gegenüber dem relativ verdrehbaren Schwungring (1, 2) abgedichtet und mit einer Flüssigkeit einer Viskosität von 100 bis 200 000 cSt gefüllt ist und daß die Dämpfungseinrichtung durch dei Flüssigkeit und die von dieser benetzten, relativ bewegbaren Flächen der Feder (6) und der Schwungringe (1, 2) gebildet wird und mit einem Totgang versehen ist, durch den die Dämpfungswirkung bei einer Relativverdrehung von weniger als 30° aufgehoben ist, wobei die relativ verdrehbaren Flächen zur Bildung des Totganges mit in eine überlappende Position bringbaren Dämpfungszonen (15) versehen sind, die im nicht verdrehten Zustand in Umfangsrichtung einen größeren Abstand voneinander haben als im relativ verdrehten, überlappenden Zustand der Schwungringe (1, 2) und daß die Dämpfungszonen gleichmäßig auf dem Umfang verteilt sind.

2. Schwungrad nach Anspruch 1, dadurch gekennzeichnet, daß die Dämpfungseinrichtung mit einem Totgang versehen ist, durch den die Dämpfungswirkung bei einer Relativverdrehung von weniger als 10° aufgehoben ist.

3. Schwungrad nach Anspruch 1, dadurch gekennzeichnet, daß die Dämpfungseinrichtung bei einer Relativverdrehung von weniger als 5° aufgehoben ist.

4. Schwungrad nach Anspruch 1 bis 3, dadurch gekennzeichnet, daß die Feder (6) einander radial umschließende Halteflächen des ersten und des zweiten Schwungringes (1, 2) verbindet.

5. Schwungrad nach Anspruch 1 bis 3, dadurch gekennzeichnet, daß die Feder (6) einander axial gegenüberliegende Halteflächen des ersten und des zweiten Schwungringes verbindet.

6. Schwungrad nach Anspruch 1 bis 5, dadurch gekennzeichnet, daß der größte Abstand der Dämpfungszonen wenigstens 1,5 mal so groß ist wie der Abstand der übrigen Flächen.

7. Schwungrad nach Anspruch 1 bis 6, dadurch gekennzeichnet, daß der größte Abstand der Dämpfungszonen ein- oder mehrfach abgestuft in den gegenseitigen Abstand der übrigen Flächen übergeht.

8. Schwungrad nach Anspruch 1 bis 6, dadurch gekennzeichnet, daß der größte Abstand gleichmäßig in die gegenseitigen Abstände der übrigen Flächen übergeht.

9. Schwungrad nach Anspruch 1 bis 8, dadurch gekennzeichnet, daß die Feder (6) und/oder wenigstens einer der beiden Schwungringe (1, 2) mit wenigstens einem ringförmig vorspringenden Ansatz (7) zur Vergrößerung der von der Flüssigkeit benetzten Fläche versehen sind.

**Revendications**

1. Volant comprenant une première bague oscillante (1) reliée à un arbre d'entraînement, et une seconde bague oscillante (2) reliée à l'arbre de sortie, qui sont montées concentriquement l'une dans l'autre avec possibilité de rotation relative, un ressort (6) et un dispositif d'amortissement pour entraver les rotations relatives étant prévus entre la première et la seconde bague oscillante (1, 2), caractérisé en ce que le ressort (6) a une forme annulaire et est réalisé en matériau élastique à base de caoutchouc et que les bagues oscillantes (1, 2) sont disposées concentriquement, que le ressort (6) est fixé par des surfaces de fixation aux bagues oscillantes (1, 2) et présente, en dehors des surfaces de fixation, une distance par rapport à celles-ci, que cette distance crée une cavité qui est fermée hermétiquement par rapport à la bague oscillante (1, 2) pouvant subir une rotation relative et est remplie d'un liquide dont la viscosité est comprise entre 100 et 200 000 cSt et que le dispositif d'amortissement est constitué par le liquide et par les surfaces du ressort (6) et des bagues oscillantes (1, 2) pouvant se déplacer relativement et mouillées par celui-ci, et est pourvu d'une course à vide pendant laquelle l'effet d'amortissement est supprimé pour une rotation relative inférieure à 30°, tandis que les surfaces à possibilité de rotation relative sont pourvues de zones d'amortissement (15) pouvant être mises en position de recouvrement afin de former la course à vide, qui implique l'absence de rotation, sur une plus grande distance mutuelle en direction périphérique qu'à l'état de recouvrement avec rotation relative des bagues oscillantes (1, 2) et que les zones d'amortissement sont réparties uniformément sur la périphérie.

2. Volant selon la revendication 1, caractérisé en ce que les dispositif d'amortissement est pourvu d'une course à vide grâce à laquelle l'effet d'amortissement est supprimé pour une rotation relative inférieure à 10°.

3. Volant selon la revendication 1, caractérisé en ce que le dispositif d'amortissement est mis hors service pour une rotation relative inférieure à 5°.

4. Volant selon les revendications 1 à 3, caractérisé en ce que le ressort (6) relie les surfaces de fixation disposées concentriquement l'une par rapport à l'autre de la première et de la seconde bague oscillante (1, 2).

5. Volant selon les revendications 1 à 3, caractérisé en ce que le ressort (6) relie les surfaces de fixation opposées axialement l'une à l'autre de la première et de la seconde bague oscillante.

6. Volant selon les revendications 1 à 5, caractérisé en ce que la plus grande distance des zones d'amortissement est au moins 1,5 fois aussi grande que la distance des autres surfaces.

7. Volant selon les revendicaitons 1 à 6, caractérisé en ce que la plus grande distance des zones d'amortissement passe à la distance mutuelle des autres surfaces avec transition à un ou plusieurs gradins.

8. Volant selon les revendications 1 à 6, caractérisé en ce que la plus grande distance se continue de manière uniforme par les distances opposées des autres surfaces.

9. Volant selon les revendications 1 à 8, caractérisé en ce que le ressort (6) et/ou moins l'une des deux bagues oscillantes (1, 2) sont pourvus d'au moins une embase (7) annulaire et en saillie, pour augmenter la surface mouillée par le liquide.

**Claims**

1. A flywheel, comprising a first inertia ring (1) connected to the input shaft and a second inertia ring (2) connected to the output shaft, which rings are mounted concentrically one inside the other in a relatively rotatable fashion, a spring (6) and a damping device being provided between the first and the second inertia ring (1, 2) in order to inhibit relative rotations, characterised in that the spring (6) with an annular shape consists of elastomeric material and is arranged concentrically with the inertia rings (1, 2), in that the spring (6) is held fast by holding faces against the inertia rings (1, 2) and has a spacing from the latter outside the holding faces, in that a cavity is formed by the spacing, which cavity is sealed off from the relatively rotatable inertia ring (1, 2) and filled with a fluid having a viscosity of 100 to 200,000 cSt, and in that the damping device is formed by the fluid and the relatively movable faces of the spring (6) and the inertia rings (1, 2) that are wetted by the fluid, and is provided with a play, through which the damping effect is neutralised at a relative rotation of less than 30°, the relatively rotatable faces being provided with damping zones (15) for the purpose of forming the play, which damping zones can be brought into an overlapping position and in the non-rotated state have a larger spacing from one another in the peripheral direction than they do in the relatively rotated, overlapping state of the inertia rings (1, 2), and in that the damping zones are distributed evenly on the periphery.

2. A flywheel according to claim 1, characterised in that the damping device is provided with a play, through which the damping effect is neutralised at a relative rotation of less than 10°.

3. A flywheel according to claim 1, characterised in that the damping effect is neutralised at a relative rotation of less than 5°.

4. A flywheel according to any of claims 1 to 3, characterised in that the spring (6) connects holding face of the first and second inertia ring (1, 2) which surround one another radially.

5. A flywheel according to any of claims 1 to 3, characterised in that the spring (6) connects holding faces of the first and second inertia ring which are axially opposed to one another.

6. A flywheel according to any of claims 1 to 5, characterised in that the largest spacing of the damping zones is at least 1.5 times as large as the spacing of the remaining faces.

7. A flywheel according to any of claims 1 to 6, characterised in that the largest spacing of the damping zones passes over into the mutual spacing of the remaining faces in a single-stepped or multiple-stepped fashion.

8. A flywheel according to any of claims 1 to 6, characterised in that the largest spacing passes over smoothly into the mutual spacing zone of the remaining faces.

9. A flywheel according to any of claims 1 to 8, characterised in that the spring (6) and/or at least one of the two inertia rings (1, 2) are provided with at least one annularly projecting tongue (7) in order to increase the area wetted by the fluid.

# Fig. 1

# Fig. 2

Fig. 3

Fig. 4

Fig. 5

Fig. 6